# EUROPEAN PATENT SPECIFICATION

(11) **EP 3 985 218 B1**
(45) Date of publication and mention of the grant of the patent: **27.03.2024**
(21) Application number: 20822051.7
(22) Date of filing: 05.06.2020
(51) Int. Cl.: E05F 15/73, E05F 15/77, E06B 3/46, G05D 1/02

(54) **LOGISTICS CONTROL SYSTEM, ROBOT CONTROL APPARATUS, AND AUTOMATIC DOOR CONTROL METHOD**
LOGISTIKSTEUERUNGSSYSTEM, ROBOTERSTEUERUNGSVORRICHTUNG UND AUTOMATISCHES TÜRSTEUERUNGSVERFAHREN
SYSTÈME DE COMMANDE LOGISTIQUE, APPAREIL DE COMMANDE DE ROBOT ET PROCÉDÉ DE COMMANDE DE PORTE AUTOMATIQUE

(30) Priority: 14.06.2019 CN 201910515883
(43) Date of publication of application: 20.04.2022
(73) Proprietor: Hangzhou Hikrobot Co., Ltd., Hangzhou, Zhejiang 310051 (CN)
(72) Inventor: ZHANG, Qifan, Hangzhou, Zhejiang 310051 (CN)
(74) Representative: BRP Renaud & Partner mbB Rechtsanwälte Patentanwälte Steuerberater
(86) International application number: PCT/CN2020/094504
(87) International publication number: WO 2020/248899

(56) References cited:
- CN-A- 106 313 114
- CN-A- 109 236 107
- JP-A- 2002 047 861
- US-A1- 2018 353 041

## Description

The present application claims the priority of a Chinese patent application NO. 201910515883.2 filed with the China National Intellectual Property Administration on June 14, 2019 and entitled "LOGISTICS CONTROL SYSTEM, ROBOT CONTROL APPARATUS, AND AUTOMATIC DOOR CONTROL METHOD".**TECHNICAL FIELD**

The present disclosure relates to the field of logistics automation, and in particular to a logistics control system for logistics handling by using an intelligent mobile robot such as an AGV (Automated Guided Vehicle), a robot control apparatus for carrying out logistics scheduling on an intelligent mobile robot, an automatic door control method for assisting traffic of an intelligent mobile robot and a route planning apparatus integrating an automatic door control function.

### BACKGROUND

With continuous improvement of logistics automation, applications of intelligent mobile robots are becoming more and more extensive. Among there, some logistics handling scenarios using intelligent mobile robots would contain different areas, and automatic doors are provided between various areas.

How to prevent the automatic door from affecting traveling fluency of the intelligent mobile robot thus becomes a technical problem to be solved in the prior art.

US 2018/0353041 A1 involves a system consisting of an unmanned vehicle that moves independently within an environment, in particular a cleaning robot, and a door located in the environment with a doorframe and a door leaf. The vehicle has a detector for detecting object data within the environment. In order to be able to open a door without the vehicle manually acting on the door, the door has an electronic actuator for changing an open state of the door, and the vehicle has or is allocated a controller, which is set up to output a control command for activating the actuator depending on an operating state and/or position of the vehicle.

CN106313114A involves a door-passing system for an indoor inspection robot. The door-passing system for the indoor inspection robot includes a roller shutter door, the inspection robot, a roller shutter door controller, a roller shutter door motor, a roller shutter door wireless communication module, a laser emitter and a laser receiver, wherein the inspection robot includes a robot controller, a robot wireless communication module and an obstacle avoidance device. The invention further involves a door-passing method for the door-passing system of the indoor inspection robot. The method includes the following steps of starting a door-passing mode when the inspection robot is close to the roller shutter door; confirming whether the roller shutter door is closed completely or not; emitting laser with the laser emitter; receiving the laser with the laser receiver; correcting the position through the robot wireless communication module; sending a door-opening instruction through the robot controller; opening the roller shutter door under control of the roller shutter door controller; and controlling the roller shutter door to close after the inspection robot passes the roller shutter door. Through the door-passing system and method for the indoor inspection robot, the inspection robot can automatically judge and correct its own position and have the automation control function for automatically controlling the roller shutter door to be opened and controlling the roller shutter door to close after passing the door.

CN109236107A involves an automatic door control method and device, a system and a storage medium. The control method comprises the steps that the position information of a robot is acquired; according to the position information, whether or not the current position of the robot is in a preset area is determined; if yes, a door opening signal is sent to an automatic door, and the automatic door is controlled to be opened. According to the control method of the automatic door, under the circumstance of unmanned interference, the automatic door is controlled to be opened, the robot can quicklyand safely pass through the automatic door, and the work efficiency of the robot is improved.

### SUMMARY

In view of this, various embodiments of the present disclosure provide a logistics control system, a robot control apparatus, an automatic door control method, and a route planning apparatus.

The invention is set out in the appended set of claims.

In an embodiment, a logistics control system is provided, including:
a robot control apparatus configured to plan a traveling route passing through an automatic door for an intelligent mobile robot, monitor a moving position of the intelligent mobile robot along the traveling route, wherein the traveling route is a route passing through the automatic door, and generate a door-opening request for the automatic door when it is monitored that the moving position of the intelligent mobile robot reaches a traffic upstream section of the automatic door; and
a device control apparatus configured to control opening of the automatic door in response to the door-opening request.

In another embodiment, a robot control apparatus is provided, including:
a route planning module configured to plan a traveling route passing through an automatic door for an intelligent mobile robot, monitor a moving position of the intelligent mobile robot along the traveling route, wherein the traveling route is a route passing through the automatic door, and generate a door-opening request for the automatic door when it is monitored that the moving position of the intelligent mobile robot reaches a traffic upstream section of the automatic door; and
a control platform module configured to send the door-opening request to a device control apparatus, so that the device control apparatus controls opening of the automatic door in response to the door-opening request.

In another embodiment, an automatic door control method is provided, comprising:
planning a traveling route passing through an automatic door for an intelligent mobile robot;
monitoring a moving position of the intelligent mobile robot along the traveling route; wherein the traveling route is a route passing through the automatic door;
generating and reporting to a device control apparatus a door-opening request for the automatic door, when it is monitored that the moving position of the intelligent mobile robot reaches a traffic upstream section of the automatic door, wherein the door-opening request is used to trigger the device control apparatus to control opening of the automatic door.

In another embodiment, a route planning apparatus is provided, which comprises a processor configured to perform steps of the automatic door control method described above.

In another embodiment, a non-transitory computer readable storage medium is provided, which stores instructions thereon, when the instructions are executed by a processor, cause the processor to perform steps of the automatic door control method described above.

Based on above embodiments, the robot control apparatus can plan the traveling route passing through the automatic door for the intelligent mobile robot, and can also generate the door-opening request when the moving position of the intelligent mobile robot reaches a traffic upstream section of the automatic door by monitoring the moving position of the intelligent mobile robot along the traveling route, so as to trigger the device control apparatus to control opening of a corresponding automatic door, which can thereby enable the control of the automatic door to be coordinated and cooperated with traveling of the intelligent mobile robot without resorting to a manual operation, without aid of sense detection at the automatic door, and without sending a task command to the intelligent mobile robot, so as to prevent the automatic door from affecting traveling fluency of the intelligent mobile robot, and avoid at the same time increasement of the labor cost, or the hardware cost required to support the sense detection.

Moreover, as a further optimization, above embodiments can also support passing-through in batch of the intelligent mobile robots during a single open of the automatic door, so as to avoid frequent opening and closing of the automatic door for the intelligent mobile robots passing through in batch, thereby reducing power consumption of the automatic door and improving efficiency of the passing-through in batch of the intelligent mobile robots.

### BRIEF DESCRIPTION OF DRAWINGS

In order to illustrate the embodiments of the present disclosure and the technical solutions of the prior art more clearly, drawings required to be used in the embodiments and the prior art are briefly explained below. Obviously, the drawings described below are only some of the embodiments of the present disclosure. Other drawings can be obtained based on these drawings without creative efforts for those of ordinary skill in the art.
Fig. 1 is an exemplary structural diagram of a logistics control system in an embodiment;
Fig.2 is a schematic diagram of an extended application of the logistics control system shown in Fig. 1;
Figs. 3a and 3b are schematic diagrams of another extended application of the logistics control system shown in Fig. 1;
Figs. 4a and 4b are schematic diagrams of another extended application of the logistics control system shown in Fig. 1;
Fig. 5 is a schematic diagram of an equivalent alternative application of the logistics control system shown in Fig. 1;
Fig. 6 is a schematic diagram of a management interface of the logistics control system shown in Fig. 1;
Fig. 7 is a schematic diagram of an exemplary structure of a robot control apparatus in the logistics control system shown in Fig. 1;
Fig. 8 is a schematic diagram of an interactive process based on the exemplary structure shown in Fig. 7;
Fig. 9 is a schematic diagram of an interactive process based on the exemplary structure shown in Fig. 7;
Fig. 10 is a schematic diagram of an interactive process based on the exemplary structure shown in Fig. 7;
Fig. 11 is a schematic diagram of an exemplary flow of an automatic door control method in another embodiment;
Fig. 12 is a schematic diagram of an extended flow of the automatic door control method shown in Fig. 11;
Fig. 13 is a schematic diagram of another extended flow of the automatic door control method shown in Fig. 11;
Fig. 14 is a schematic structural diagram of a route planning apparatus in another embodiment.

### DETAILED DESCRIPTION

To make the purposes, technical solutions, and advantages of the present disclosure clearer, the present disclosure is further described in detail below with reference to the accompanying drawings and embodiments. Obviously, the embodiments described are only a portion of the embodiments of the present disclosure, rather than all embodiments. Based on the embodiments in the present disclosure, all other embodiments obtained by those skilled in the art without creative efforts fall within the protection scope of the present disclosure.

In order to prevent the automatic door from affecting traveling fluency of the intelligent mobile robot, embodiments of the present disclosure provide a logistics control system, a robot control apparatus, an automatic door control method, a route planning apparatus, and a non-transitory computer readable storage medium. The intelligent mobile robot involved in the embodiments of the present disclosure may include an AGV (Automated Guided Vehicle) or other types of robots with a traveling function. Moreover, an application scenario of the solutions provided in the present disclosure may be a logistics scenario, or any other scenario where the travelling of the intelligent mobile robot is affected by the automatic door, such as a venue service scenario, a hotel service scenario, etc., where the intelligent mobile robot is used for services.

For the convenience of description, the intelligent mobile robot being an AGV is taken as an example to explain the logistics control system provided by the present disclosure. The intelligent mobile robot involved in the present disclosure is certainly not limited to AGV.

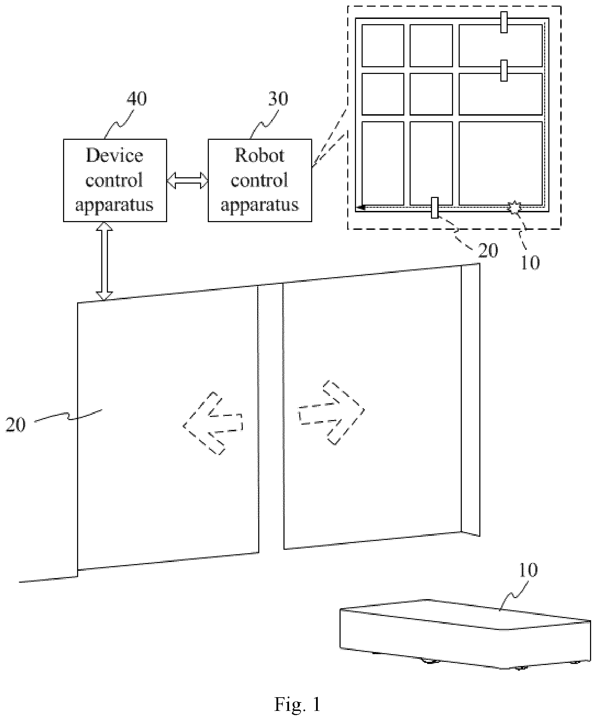

Fig. 1 is an exemplary structural diagram of a logistics control system in an embodiment. Referring to Fig. 1, for example, the intelligent mobile robot is an AGV. In the embodiment, the logistics control system may include a robot control apparatus 30 and a device control apparatus 40. Within a dotted box in Fig. 1, there is a map template of a movable area where the AGV is located, and a kind of positional relationship between an AGV 10 and an automatic door 20 is shown in the map template.

Specifically, the robot control apparatus 30 is configured to plan a traveling route passing through the automatic door 20 for the AGV 10 and to monitor a moving position of the AGV 10 along the traveling route. When it is monitored that the moving position of the AGV 10 reaches a traffic upstream section of the automatic door 20, a door-opening request for the automatic door 20 is generated.

The device control apparatus 40 is configured to control opening of the automatic door 20 in response to the door-opening request. Herein, the robot control apparatus 30 monitors the moving position of the AGV 10, that is, performs real-time positioning of the AGV 10, which may be achieved through any position tracking or positioning method in the prior art.

The robot control apparatus 30 may send to any of a plurality of AGVs a task instruction that is in response to a logistics task, for example, a handling task, through wireless communication. Accordingly, the AGV 10 may be the AGV that is selected from the plurality of AGVs for completing the logistics task assigned. Moreover, the traveling route planned for the AGV 10 may take a parking location where the AGV 10 receives the task assigned as a starting point and an initial execution location of the logistics task as an ending point, or it may take the initial execution location of the logistics task as a starting point and an execution completed location of the logistics task as an ending point, or, it may also take the execution completed location of the logistics task as a starting point and the parking location of the AGV 10 as an ending point.

Alternatively, the AGV 10 may also be an AGV without a task movement requirement. For example, the AGV 10 is the AGV that transfers to a parking location or moves to a charging station for charging. Accordingly, the traveling route planned for the AGV 10 may be a route corresponding to no-task movement requirement, for example, a route that takes a parking location of the AGV 10 as a starting point and another parking location of the AGV 10 or the position of the charging station as an ending point; or a route that takes the charging station as a starting point and the parking location of the AGV 10 as an ending point.

Therefore, as can be understood, the traveling route passing through the automatic door 20 planned for the AGV 10 in this embodiment should not be limited to a certain movement stage where the AGV 10 has a specific intention, but may be universally applied to any movement of the AGV 10.

As can be understood, if the AGV 10 is moving towards the automatic door 20, it can be determined that the AGV is located upstream the automatic door. The traffic upstream section herein can be understood as a section range where the AGV 10 is about to arrive at the automatic door 20, that is, a predetermined section range that triggers a door to be opened. Moreover, it may be able to determine whether the AGV 10 reaches the traffic upstream section of the automatic door 20 by determining whether a remaining trip between the AGV 10 and the automatic door 20 is less than a predetermined threshold. For example, the robot control apparatus 30 may monitor the remaining trip from the moving position of the AGV 10 to the automatic door 20, and determine that the moving position of the AGV 10 reaches the traffic upstream section of the automatic door 20, when the remaining trip from the moving position of the AGV 10 to the automatic door 20 is less than the predetermined threshold. The automatic door 20 is ensured to have been opened when the AGV 10 arrives at the automatic door 20, and the predetermined threshold may be set according to actual conditions.

The device control apparatus 40 may be a main control apparatus in the scenario where the logistics system is located, and various field equipment including the automatic door 20 may communicate with and be controlled by the device control apparatus 40. Moreover, a wireless communication connection or a wired communication connection such as a cable may be established between the robot control apparatus 30 and the device control apparatus 40.

The device control apparatus 40 may be configured to control the opening of corresponding automatic door 20 in response to a door-opening request generated by the robot control apparatus 30. For example, the device control apparatus 40 may control the opening of corresponding automatic door 20 through an interaction with an automatic door driving mechanism.

Based on above embodiments, the robot control apparatus 30 may monitor the moving position of the AGV 10 along the traveling route, and generate a door-opening request when the moving position of the AGV 10 reaches the traffic upstream section of the automatic door 20. The door-opening request is used to trigger the device control apparatus 40 to control the opening of corresponding automatic door 20, so that:
1. There is no need to resort to a manual operation, thus there is no need to equip the automatic door with a dedicated person to garrison.
2. There is no need to resort to a hardware-based sense detection, and a hardware cost required for the sense detection and a manual maintenance cost for avoiding hardware failure can be saved.
3. There is no need to configure sub-actions dedicated to cooperating with the opening and closing of the automatic door in task commands, and it can prevent the AGV from interrupting the movement fluency due to the execution of sub-actions dedicated to cooperating with the opening and closing of the automatic door, and avoid the dependence of the control of the automatic door on the task commands.

That is, above embodiments can enable the control of the automatic door 20 to be coordinated and cooperated with the traveling of the AGV 10, without resorting to a manual operation, without aid of sense detection at the automatic door, or without sending a task command to the AGV 10, so as to prevent the automatic door 20 from affecting the traveling fluency of the AGV 10, and avoid at the same time increasement of the labor cost, or the hardware cost required to support the sense detection.

In a practical application, for setting of the section range of the traffic upstream section, for example, the setting of the predetermined threshold of a travel distance, in addition to consideration of a relationship between the remaining trip from the AGV to the automatic door, a travel speed of the AGV and a duration of the door-opening operation of the automatic door 20, following factors may be further considered, such as a processing delay of the robot control apparatus 30, a communication delay between the robot control apparatus 30 and the device control apparatus 40, an interaction delay between the device control apparatus 40 and the automatic door driving mechanism, an execution delay for driving the automatic door 20 by the automatic door driving mechanism, and a possible positioning signal drift when the robot control apparatus 30 detects the moving position of the AGV, etc. The main purpose of considering these factors is to avoid asynchrony between the time when the AGV arrives at the automatic door and the time when the automatic door arrives at an opened-in-position state, so as to avoid the collision between the AGV without obstacle avoidance function and the automatic door. Also, the section range of the traffic upstream section may be set by comprehensively considering environmental conditions of the logistics scenario and combining the experience of the management personnel.

The automatic door 20 controlled to be opened in response to the door-opening request may be controlled to be closed by the device control apparatus 40 by itself, based on an estimation of passing-through time. In order to improve accuracy of the closing timing of the automatic door and avoid potential problems possibly caused by an inaccurate time estimation, such as a collision accident due to early closing of the automatic door 20 and blocking to the passing-through of the AGV 10, or ultra-long delay closing of the automatic door 20, in above embodiments, the robot control apparatus 30 may initiate a door-closing request for the automatic door in combination with a closed-loop feedback of the device control apparatus 40. The closed-loop feedback of the device control apparatus 40 herein may be to feed back the opened-in-position state of the automatic door 20 to the robot control apparatus 30, that is, the device control apparatus 40 is further configured to send an opened-in-position message to the robot control apparatus 30 in response to the opened-in-position state of the automatic door 20.

The opened-in-position state in the embodiment may indicate that the door leaf of the automatic door is opened to an amplitude sufficient for the AGV to pass through. In implementing the embodiment, in order to avoid additional measurement and determination of an opening amplitude of the door leaf, the state where the door leaf of the automatic door reaches a position of an opening amplitude limit may be determined as the opened-in-position state. The state where the door leaf reaches the position of the opening amplitude limit may be detected by the automatic door driving mechanism that drives opening and closing of the automatic door and reported to the device control apparatus 40. Accordingly, the device control apparatus 40 may determine the state, where the door leaf reaches the position of the opening amplitude limit, reported by the automatic door driving mechanism as the opened-in-position state.

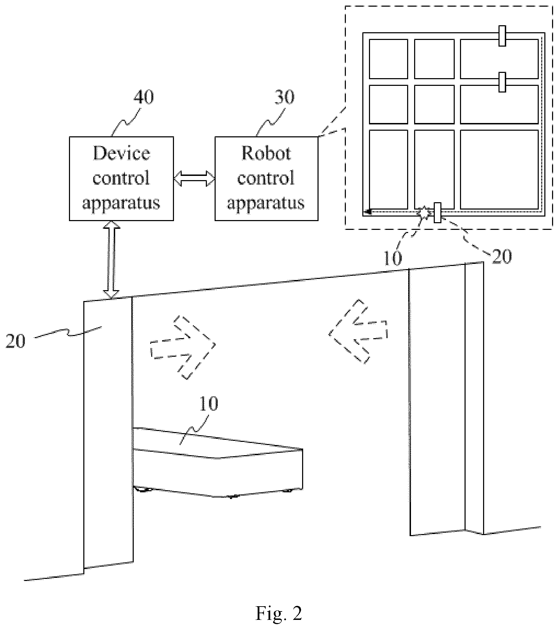

Fig. 2 is a schematic diagram of an extended application of the logistics control system shown in Fig. 1. Referring to Fig. 2, the device control apparatus 40 is further configured to send an opened-in-position message to the robot control apparatus 30 in response to the opened-in-position state of the automatic door 20. Accordingly, the robot control apparatus 30 is further configured to detect a traffic state of the AGV 10 travelling through the automatic door 20 in response to receipt of the opened-in-position message, and generate a door-closing request for the automatic door 20 in response to a passing-through completed state of the AGV 10. Moreover, the device control apparatus 40 is further configured to control the closing of the automatic door 20 in response to the door-closing request generated by the robot control apparatus 30. The passing-through completed state herein is moving from an upstream position to the automatic door 20 to a downstream position from the automatic door 20, that is, a position relationship between the AGV 10 and the automatic door 20 satisfies that the AGV 10 changes from being close to the automatic door 20 to being far away from the automatic door 20. For ease of understanding, the map template in the dotted box in Fig. 1 shows that the AGV 10 is located at the upstream position relative to the automatic door 20, while the map template in the dotted box in Fig. 2 shows that the AGV 10 is located at the downstream position relative to the automatic door 20.

On the basis that the robot control apparatus 30 initiates the door-closing request in combination with the closed-loop feedback of the device control apparatus 40, as a further optimization, above embodiments can also support a plurality of AGVs passing in batch during a single open of the automatic door 20.

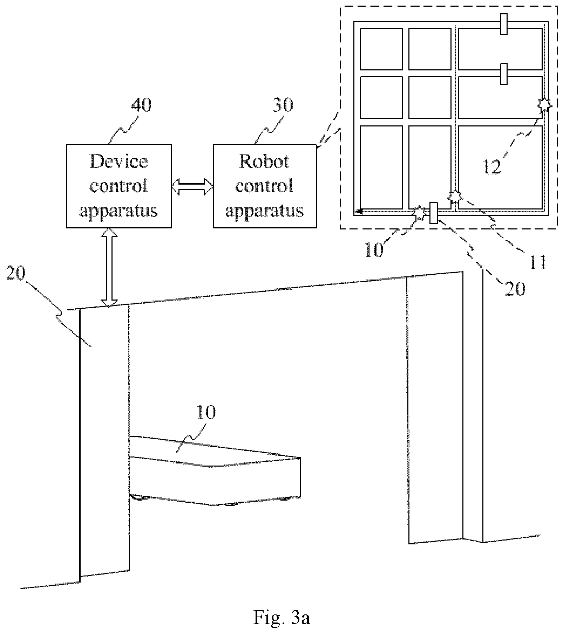

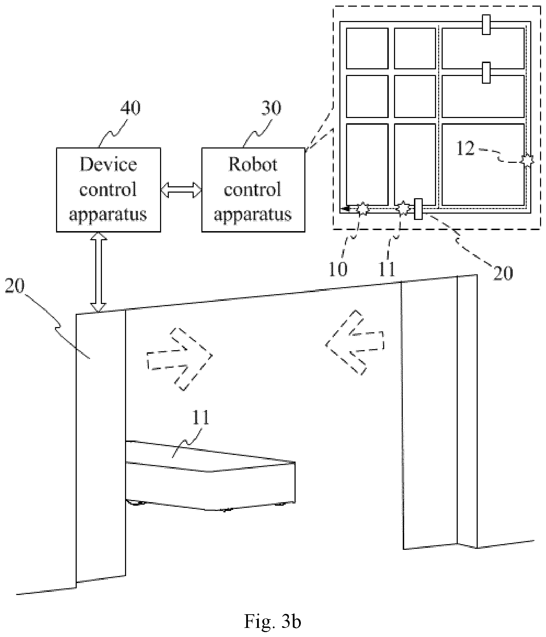

Figs. 3a and 3b are schematic diagrams of another extended application of the logistics control system shown in Fig. 1.

Referring to Fig. 3a, the device control apparatus 40 is further configured to send the opened-in-position message to the robot control apparatus 30 in response to the opened-in-position state of the automatic door 20. Accordingly, the robot control apparatus 30 is further configured to detect the traffic state of the AGV 10 travelling through the automatic door in response to receipt of the opened-in-position message, and search for an other AGV with a traffic-following trend. If no other AGV with the traffic-following trend is found, the robot control apparatus 30 generates the door-closing request for the automatic door 20 in response to the passing-through completed state of the AGV 10. Accordingly, the device control apparatus 40 is further configured to control the closing of the automatic door 20 in response to the door-closing request generated by the robot control apparatus 30. The traffic-following trend of an other AGV herein is based on the AGV 10, that is, the traffic-following trend described herein may be understood as a trend in following the AGV 10 to pass through.

In an optional implementation, if the other AGV with the traffic-following trend is found, the robot control apparatus 30 may wait for the passing-through of the other AGV with the traffic-following trend, instead of generating the door-closing request, so as to avoid frequent opening and closing of the automatic door 20. At this moment, since a control process of the other AGV with the traffic-following trend by the robot control apparatus 30 is the same as the control process of the AGV 10, the robot control apparatus may search and determine whether the other AGV with the traffic-following trend is followed by another AGV, during the passing-through of the other AGV with the traffic-following trend, and if not, generate and report to the device control apparatus 40 the door-closing request, and so on, thereby avoiding frequent closing of the automatic door. This implementation will be described in combination with Figs. 3a and 3b. For the AGV 10, if the other AGV with the traffic-following trend, i.e., the AGV 11 shown in Figs. 3a and 3b, is found, the robot control apparatus 30 may wait for the passing-through of the AGV 11 instead of generating the door-closing request. Since the control process of the AGV 11 by the robot control apparatus 30 is the same as the control process of the AGV 10, during the passing-through of the AGV 11, the robot control apparatus 30 may search for another AGV with the traffic-following trend relative to the AGV 11, and if not, generate and report to the device apparatus 40 the door-closing request, and so on, thereby avoiding frequent closing of the automatic door.

In another alternative implementation, if the other AGV with the traffic-following trend is found, the traffic state of the other AGV with the traffic-following trend traveling through the automatic door 20 is detected, and the door-closing request for the automatic door is generated in response to a passing-through completed state of the other AGV with the traffic-following trend. Referring to Fig. 3b again, if the other AGV with the traffic-following trend, i.e. the AGV 11 shown in Figs. 3a and 3b, is found, the traffic state of the AGV 11 with the traffic-following trend traveling through the automatic door 20 is detected. As mentioned above, the automatic door 20 is kept in the opened-in-position state and the AGV 11 having a trend in following the AGV 10 is released, which aims to avoid frequent opening and closing of the automatic door 20. Considering a closing duty of the automatic door 20 to a designated area, when the AGV 11 having the trend in following the AGV 10 completes its passing-through, it is no longer necessary to continue searching based on the AGV 11, and the automatic door 20 is closed. That is, the door-closing request for the automatic door 20 is generated in response to the passing-through completed state of the AGV 11 with the traffic-following trend.

In an extended application shown in Figs. 3a and 3b, the traffic-following trend can be understood as whether an other AGV is about to arrive at the automatic door 20 when the AGV 10 passes through the automatic door 20, that is, the determination of whether a robot is the other intelligent mobile robot with the traffic-following trend is based on a position relationship with the automatic door, and the traffic-following trend can be understood as a constraint on the distance dimension. For the determination of the traffic-following trend representing the constraint on the distance dimension, a position relationship of the designated AGV relative to the automatic door 20 may be detected first, the traveling route of which passes through the automatic door 20. Designated AGV located upstream the automatic door is then detected based on the position relationship detected. The designated AGV whose remaining trip to the automatic door 20 is less than a predetermined threshold is determined as the other AGV with the traffic-following trend, from the designated AGV located upstream of the automatic door 20. For example, for the AGV 11 and AGV 12 shown in Figs. 3a and 3b, if the remaining trip from the AGV 11 to the automatic door is less than the predetermined threshold, the AGV 11 may be considered as the other AGV with the traffic-following trend relative to the AGV 10, and if the remaining trip from the AGV 12 to the automatic door is not less than the predetermined threshold, the AGV 12 may be considered as another AGV that does not have the traffic-following trend relative to the AGV 10.

As can be understood, for the case where the determination of the traffic-following trend is based on the constraint on the distance dimension, if stringency of the closing duty of the automatic door 20 to the designated area is not high, searching may also be considered to be continued based on the AGV 11. That is, searching for an other AGV with the traffic-following trend may be a cascade search method based on the AGV 10. For example, first, detecting the traffic state of the AGV 10 traveling through the automatic door in response to receipt of the opened-in-position message, and searching for an other AGV with the traffic-following trend; then searching for another AGV having the trend in following the other AGV in response to the passing-through completed state of each of the other AGV traveling through the automatic door 20, and so on, until no AGV with the traffic-following trend can be found.

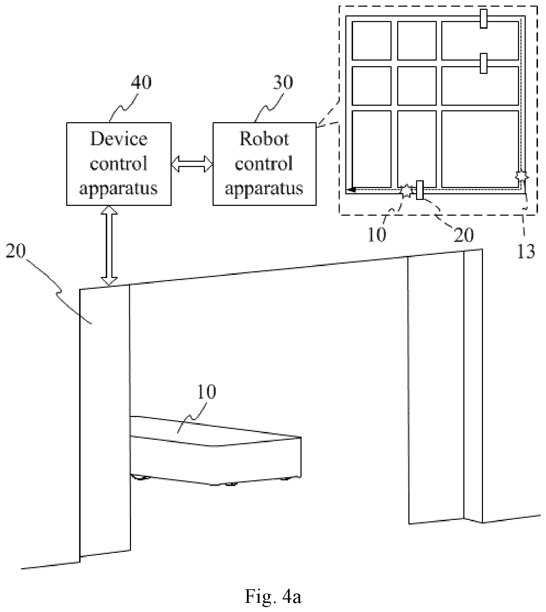

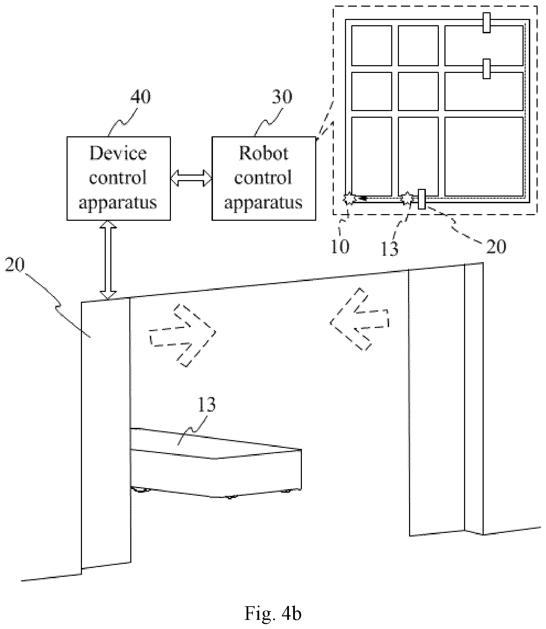

Figs. 4a and 4b are schematic diagrams of another extended application of the logistics control system shown in Fig. 1.

Referring to Fig. 4a, the robot control apparatus 30 may be further configured to detect the traffic state of the AGV 10 traveling through the automatic door in response to receipt of the opened-in-position message, and search for an other AGV with the traffic-following trend, herein:
then referring to Fig. 4b, in a case where the other AGV with the traffic-following trend, i.e. the AGV 13 shown in Figs. 4a and 4b, is found, a traffic state of the AGV 13 with the traffic-following trend traveling through the automatic door 20 is detected, and the door-closing request for the automatic door 20 is generated in response to a passing-through completed state of the AGV 13 with the traffic-following trend.

In the extended application shown in Figs. 4a and 4b, the traffic-following trend can be understood as whether an other AGV has the same or similar mobile intention or group synchronization with the AGV 10, and the traffic-following trend can be understood as a constraint on the scheduling dimension. For the determination of the traffic-following trend representing the constraint on the scheduling dimension, AGV formation information of the AGV 10 may be acquired first, and the AGV whose traveling route passes through the automatic door 20 is determined as the designated AGV, from a plurality of AGVs other than the AGV 10, based on the formation information. A position relationship of the designated AGV relative to the automatic door 20 is detected, and then designated AGV located upstream the automatic door is detected based on the position relationship detected. The AGV whose remaining trip to the automatic door 20 is less than a predetermined threshold is determined as the other AGV with the traffic-following trend, from the designated AGV located upstream of the automatic door 20. As shown in Fig. 4b, the AGV 13 is the other AGV with the traffic-following trend relative to the AGV 10.

As can be understood, the AGV 13 in formation with the AGV 10 may be the AGV that complete the same task with the AGV 10, or the AGV that complete different tasks at the same location, or the AGV that migrates together with the AGV 10 in a task-free state. Therefore, above formation only means that the movements of a plurality of AGVs have the universal meaning of overlap and similarity in time and space, and should not be limited to the restricted meaning such as formation arrangement and task coordination.

In addition, if no other AGV with the traffic-following trend is found, similar to Fig. 2, the robot control apparatus 30 may generate the door-closing request for the automatic door 20 in response to the passing-through completed state of the AGV 10.

Accordingly, the device control apparatus 40 may be further configured to control closing of corresponding automatic door 20 in response to the door-closing request generated by the robot control apparatus 30.

As a further optimization based on Figs. 3a and 3b and Figs. 4a and 4b, above embodiments can also support passing-through in batch of a plurality of AGVs during a single open of the automatic door 20, so as to avoid frequent opening and closing of the automatic door 20 for the plurality of AGVs passing through in batch, thereby reducing power consumption of the automatic door. In addition, it can also avoid a situation that frequent opening and closing of the automatic door 20 blocks the AGV followed when an interval between the AGVs passing through in batch is too small, thereby improving efficiency of passing-through in batch of the AGVs.

In addition, in illustrations of Figs. 1, 2, 3a, 3b, 4a and 4b, the automatic door 20 adopts a configuration of double door leaves, and the double door leaves are regarded as the same automatic door 20. In practical application, however, in order to improve space utilization, the route of the AGV may occupy the width of only one door leaf. At this moment, the double door leaf of the same automatic door may be regarded as two automatic doors in logical.

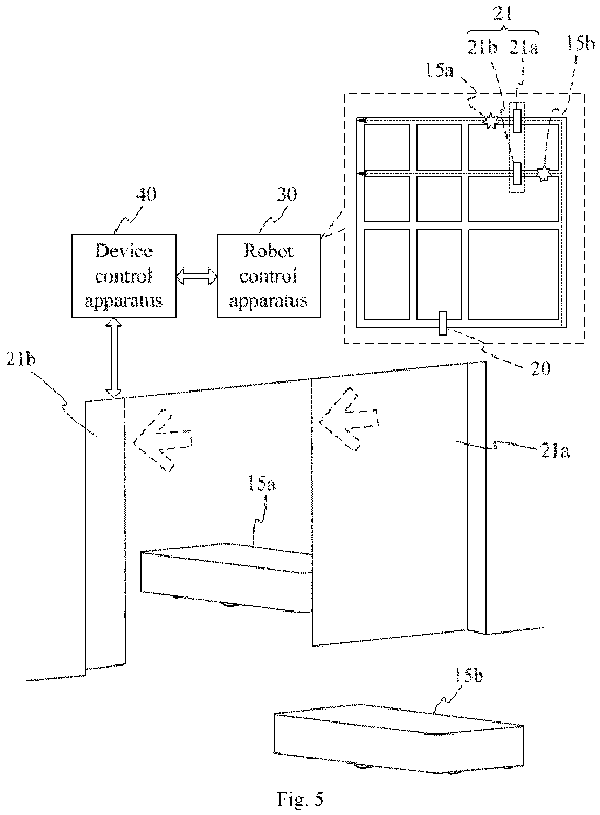

Fig. 5 is a schematic diagram of an equivalent alternative application of the logistics control system shown in Fig. 1. As shown in Fig. 5, the two door leaves of the automatic door 21 may be set as an automatic door 21a and an automatic door 21b, respectively, and the robot control apparatus 30 may plan a traveling route passing through the automatic door 21a for the AGV 15a and plan a traveling route passing through the automatic door 21b for the AGV 15b.

Accordingly, the robot control apparatus 30 may monitor moving positions of the AGV 15a and the AGV 15b along their respective traveling routes, respectively.

In the application example shown in Fig. 5, the robot control apparatus 30 first monitors that a moving position of the AGV 15a reaches a traffic upstream section of the automatic door 21a and generates a door-opening request for the automatic door 21a. The device control apparatus 40 controls opening of corresponding automatic door 21a in response to the door-opening request. After the robot control apparatus 30 generates a door-closing request for the automatic door 21a in response to a passing-through completed state of the AGV 15a traveling through the automatic door 21a, and after the device control apparatus 40 controls closing of corresponding automatic door 21a in response to the door-opening request, the robot control apparatus 30 monitors that a moving position of the AGV 15b reaches a traffic upstream section of the automatic door 21b. Thereafter, opening and closing of the automatic door 21b may be controlled successively in the same manner. The robot control apparatus 30 may generate the door-closing request for the automatic door 21a in response to the passing-through completed state of the AGV 15A traveling through the automatic door 21a, when detecting that there is no other AGV with a traffic-following trend.

In Fig. 5, as an example, the two door leaves 21a and 21b of the same automatic door 21 support asynchronous opening and closing. If the two door leaves 21a and 21b of the same automatic door 21 only support synchronous opening and closing, for an automatic door represented by each single door leaf, when it is determined whether there is an other AGV with the traffic-following trend, a target automatic door used in the determination of the traffic-following trend can be extended to two automatic doors represented by paired single door leaf.

For example, for the determination of the traffic-following trend based on the travel distance, first a position relationship of an other AGV relative to the single automatic door located in the traveling route may be detected, among all traveling routes passing through the single automatic door corresponding to the opened-in-position message and its paired single automatic door, and then a remaining trip from the other AGV located upstream the single automatic door located in the traveling route to this single automatic door is detected, thus it may be able to determine whether there is the other AGV with the traffic-following trend based on the determination of the remaining trip.

For another example, for the determination of the traffic-following trend based on the formation, it may be able to detect, from the formation information of the AGV, whether the traveling route of each of the AGV other than the AGV 10 passes through the single automatic door which is in an opened-in-position state or its paired single automatic door. Thereafter, it may be able to detect, from the formation information of the AGV, a position relationship of each of the AGV passing through this single automatic door or its paired single automatic door relative to the single automatic door located in the traveling route, and determine that the other AGV located upstream this single automatic door or its paired single automatic door has the traffic-following trend.

As can be understood, for adopting a single door leaf control or not, the factors that whether the opening degree of the single door leaf can provide sufficient width space for passing-through of the AGV may be considered. When the opening degree of the single door leaf meets requirements of the traffic width for an AGV passing through, adopting the single door leaf control can improve the space utilization of the route planning.

In a practical application, it is inevitable that the automatic door is opened manually. At this moment, the robot control apparatus 30 may not interfere with the closing of the automatic door.

To this end, the robot control apparatus 30 may be further configured to carry a device management identification in the door-opening request generated. The device control apparatus 40 may be further configured to have the device management identification in the door-opening request be carried in the opened-in-position message sent to the robot control apparatus 30 after responding to the opened-in-position state of the automatic door. Accordingly, the robot control apparatus 30 is further configured to perform a message verification on the opened-in-position message received by using the device management identification carried in the door-opening request. When the verification is passed, the robot control apparatus 30 performs a step of detecting a traffic state of the AGV 10 traveling through the automatic door in response to receipt of the opened-in-position message. When the verification fails, the opened-in-position state indicated by the opened-in-position message is considered to be triggered not by the robot control apparatus 30, and a subsequent initiation process of the door-closing request may be ignored and prohibited.

A main role of the device management identification is message verification, which is different from device addressing information for locating and communicating with the automatic door by the device control apparatus 40. For example, the robot control apparatus 30 may add the device addressing information of the automatic door to the door-opening request and the door-closing request, for identifying a corresponding automatic door by the device control apparatus 40.

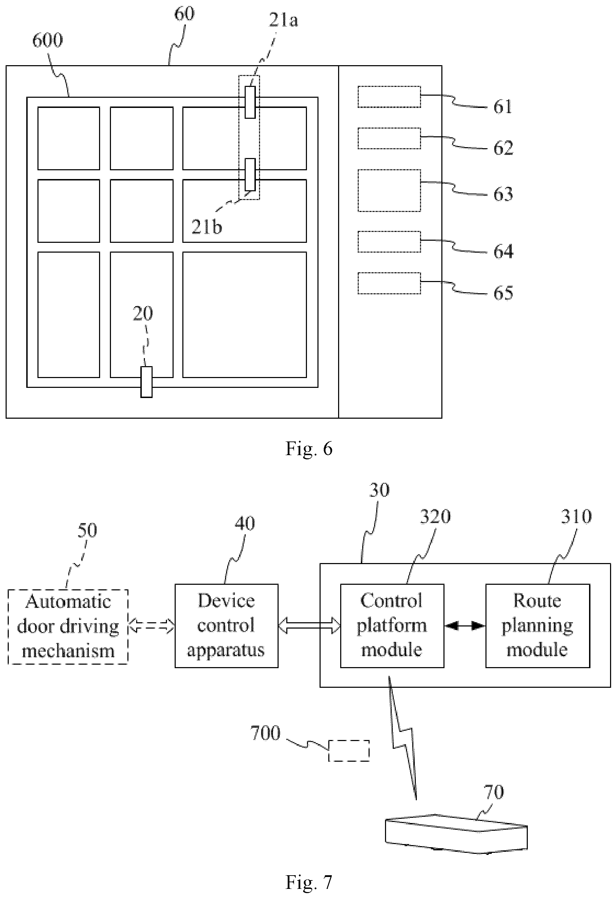

Fig. 6 is a schematic diagram of a management interface of the logistics control system shown in Fig. 1.

Referring to a left part of Fig. 6, in a management interface 60 of the robot control apparatus 30, a map template 600 containing device nodes may be created by means of a human-machine interaction, the device nodes herein include the automatic door. Accordingly, the robot control apparatus 30 plans the traveling route for the AGV 10 by using the map template created, including planning the traveling route passing through the automatic door for the AGV 10.

Next, descriptions are made by taking the device nodes include automatic doors 20, 21a and 21b as an example.

Referring to a right part of Fig. 6, each device node is configured with corresponding attribute information, including a device management identification 61, a device type 62, a device coordinate 63, a device IP address 64 and a device communication port number 65, herein:
the device management identification 61 may be identification information that is convenient for distinguishing and remembering by a user, such as a character number, etc;
the device type 62 may be a device type represented by the identification device node; for the automatic doors 20, 21a and 21b, the device type 62 is an automatic door, and for other devices, the device type 62 corresponding to the device node may also be other types, such as an air shower door;
the device coordinate 63 may be a coordinate of the device;
the device IP address 64 and the device communication port number 65 may be used as the device addressing information for identifying the automatic door by the device control apparatus 40.

The robot control apparatus 30 is thereby further configured to plan for the AGV the traveling route passing through the device node whose device type 62 is an automatic door by using the map template 600 created. Moreover, for the device node whose device type 62 is an automatic door, the robot control apparatus 30 may add, as the device addressing information, its device IP address 64 and device communication port number 65 to the door-opening request and the door-closing request, and also carry the device management identification 61 in the door-opening request to wait for a verification on whether this device management identification 61 is carried in the opened-in-position message sent by the device control apparatus 40.

In addition, all of the device management identification 61, the device type 62, the device coordinate 63, the device IP address 64 and the device communication port number 65 may be presented in the form of a control that supports a user input, so that the user can complete maintenance and configuration of the device by means of the management interface 60 without determining the device attribute information by compiling tedious configuration files.

Fig. 7 is a schematic diagram of an exemplary structure of a robot control apparatus in the logistics control system shown in Fig. 1.

Referring to Fig. 7, the robot control apparatus 30 in above embodiments may include a route planning module 310 and a control platform module 320. The control platform module 320 may be a user-oriented front-end module or upper module, which may send a task instruction 700 that is in response to a logistics task to the AGV 70. Compared with the control platform module 320, the route planning module 310 may be regarded as a back-end module or a bottom module, which may be regarded as a module subordinate to or serving the control platform module 320. The AGV 70 generally refers to any AGV including AGVs 10, 11, 12, 13, 15a and 15b mentioned in above embodiments. Specifically, the route planning module 310 is configured to plan a traveling route passing through the automatic door for the AGV 70 and monitor a moving position of the AGV 70 along a pre-planned traveling route; and generate a door-opening request for the automatic door when it is monitored that the moving position of the AGV 70 reaches a traffic upstream section of the automatic door. The control platform module 320 is configured to send the door-opening request to the device control apparatus 40, so that the device control apparatus 40 controls opening of the automatic door in response to the door-opening request. Moreover, it can also be seen from Fig. 7 that the device control apparatus 40 may be communicatively connected with the automatic door driving mechanism 50 to enable control of the automatic door.

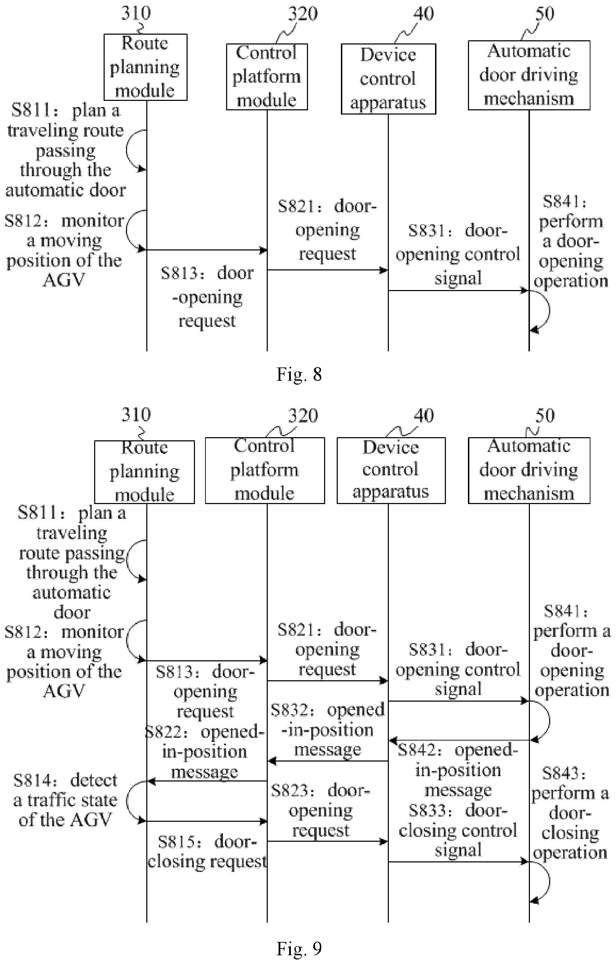

Fig. 8 is a schematic diagram of an interactive process based on the exemplary structure shown in Fig. 7. Referring to Fig. 8 and in combination with Fig. 7.

The route planning module 310 is configured to plan a traveling route passing through the automatic door for the AGV 70 (S811), monitor a moving position of the AGV 70 along the traveling route (S812), and generate a door-opening request for the automatic door when it is monitored that the moving position of the AGV 70 reaches a traffic upstream section of the automatic door (S813).

The control platform module 320 is configured to send the door-opening request generated by the route planning module 310 to the device control apparatus 40 (S821).

The device control apparatus 40 may send a door-opening control signal to the automatic door driving mechanism 50 in response to receipt of the door-opening request (S831), to control the automatic door driving mechanism 50 to drive a corresponding automatic door to be opened by performing a door-opening operation (S841).

In a practical application, the control platform module 320 may be configured to create a map template containing device nodes by means of a human-machine interaction, such as the map template 600 shown in Fig. 6. Accordingly, the route planning module 310 is further configured to call the map template, and plan for the AGV the traveling route passing through the device node whose device type is an automatic door by using the map template called, for example, planning for the AGV the traveling route passing through the device node of the device type 62. Accordingly, the route planning module 310 may identify the automatic door corresponding to the door-opening request through the device type 62 and the device coordinate 63 as shown in Fig. 6. The control platform module 320 may first process the door-opening request generated by the route planning module 310. For example, the device addressing information of the automatic door, which may be the device IP address 64 and the device communication port number 65 shown in Fig. 6, for example, may be added to the door-opening request.

Fig. 9 is a schematic diagram of an interactive process based on the exemplary structure shown in Fig. 7. Referring to Fig. 9 and in combination with Fig. 7.

After driving a corresponding automatic door to be opened by performing the door-opening operation (S841), the automatic door driving mechanism 50 may feed back an opened-in-position state to the device control apparatus 40 (S842).

The device control apparatus 40 is further configured to send an opened-in-position message to the robot control apparatus 30 in response to the opened-in-position state (S832).

The control platform module 320 is further configured to receive the opened-in-position message sent by the device control apparatus 40 in response to the opened-in-position state of the automatic door, and send the opened-in-position message received to the route planning module 310 (S822).

The route planning module 310 is further configured to acquire the opened-in-position message received by the control platform module 40, detect a traffic state of the AGV 70 traveling through the automatic door in response to the opened-in-position message acquired (S814), and generate a door-closing request for the automatic door, in response to a passing-through completed state of the AGV (S815), for example, the automatic door corresponding to the door-closing request identified by the device type 62 and the device coordinate 63 shown in Fig. 6.

The control platform module 320 is further configured to send the door-closing request initiated by the route planning module 310 to the device control apparatus 40 (S823). In a practical application, the device addressing information such as the device IP address and the device communication port number of the automatic door may be carried in the door-closing request.

The device control apparatus 40 may send a door-opening control signal to the automatic door driving mechanism 50 in response to the door-closing request received (S833), to control the automatic door driving mechanism 50 to drive a corresponding automatic door to be closed by performing a door-closing operation (S843).

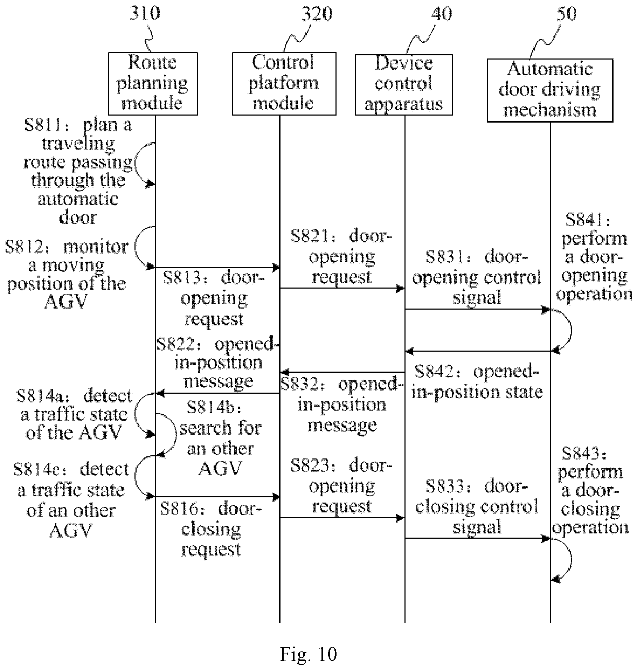

Fig. 10 is a schematic diagram of an interactive process based on the exemplary structure shown in Fig. 7. Referring to Fig. 10 and in combination with Fig. 7, as an alternative or optimization method for initiating a door-closing request by the route planning module 310 as shown in Fig. 9.

The route planning module 310 is further configured to acquire the opened-in-position message received by the control platform module 40, and detect a traffic state of the AGV traveling through the automatic door (S814a) in response to the opened-in-position message acquired, and search for an other AGV with a traffic-following trend (S814b).

In a case where no other AGV with the traffic-following trend is found, a door-closing request for the automatic door may be generated in response to a passing-through completed state of the AGV, which is similar to S815 in Fig. 9.

In a case where the other AGV with the traffic-following trend is found, a traffic state of the other AGV with the traffic-following trend traveling through the automatic door is detected (S814c), and the door-closing request for the automatic door is generated in response to a passing-through completed state of the other AGV with the traffic-following trend (S816), for example, the automatic door corresponding to the door-closing request identified by the device type 62 and the device coordinate 63 shown in Fig. 6.

The control platform module 320 is further configured to send the door-closing request initiated by the route planning module 310 to the device control apparatus 40 (S823). In a practical application, the device addressing information such as the device IP address and the device communication port number of the automatic door may be carried in the door-closing request.

The device control apparatus 40 may send a door-opening control signal to the automatic door driving mechanism 50 in response to receipt of the door-closing request (S833), to control the automatic door driving mechanism 50 to drive a corresponding automatic door to be closed by performing a door-closing operation (S843).

In another implementation, in a case where the other AGV with the traffic-following trend is found, the route planning module 310 wait for the passing-through of the other AGV with the traffic-following trend, instead of performing an action of generating the door-closing request. Since a control process of the other AGV with the traffic-following trend by the robot control apparatus 30 is the same as the control process of the AGV that reaches the traffic upstream section of the automatic door, the robot control apparatus may search and determine whether the other AGV with the traffic-following trend is followed by another AGV, during the passing-through of the other AGV with the traffic-following trend, and if not, generate and report to the device control apparatus 40 the door-closing request, and so on, thereby avoiding frequent closing of the automatic door.

A way of detecting the other AGV with the traffic-following trend by the route planning module 310, may refer to previous descriptions in the examples shown in Figs. 3a and 3b, Figs. 4a and 4b and Fig. 5. That is, the determination of the traffic-following trend by the robot control apparatus 30 in the examples shown in Figs. 3a and 3b, Figs. 4a and 4b and Fig. 5 may be undertaken by the route planning module 310.

In addition, the control platform module 320 may be further configured to carry a device management identification, such as the device management identification 61 shown in Fig. 6, in the door-opening request generated by the route planning module 310, perform a message verification on the opened-in-position message received by using the device management identification carried in the door-opening request, and shield the opened-in-position message on which the message verification fails for the route planning module 310.

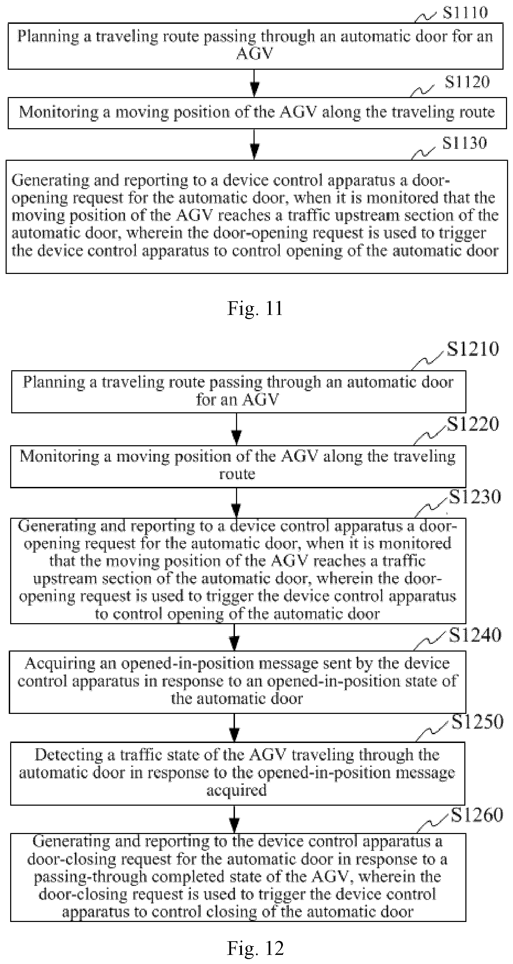

Fig. 11 is a schematic diagram of an exemplary flow of an automatic door control method in another embodiment. Referring to Fig. 11, the automatic door control method in this embodiment may be performed by the robot control apparatus and may be specifically performed by the route planning module of the robot control apparatus. The automatic door control method may include the following steps.

S1110: planning a traveling route passing through an automatic door for an AGV.

S 1120: monitoring a moving position of the AGV along the traveling route.

S1130: generating and reporting to a device control apparatus a door-opening request for the automatic door, when it is monitored that the moving position of the AGV reaches a traffic upstream section of the automatic door, wherein the door-opening request is used to trigger the device control apparatus to control opening of the automatic door.

A way of determining that the moving position of the AGV reaches a traffic upstream section of the automatic door may include:
monitoring a remaining trip from the moving position of the AGV to the automatic door; and
determining that the moving position of the AGV reaches the traffic upstream section of the automatic door when the remaining trip from the moving position of the AGV to the automatic door is less than a predetermined threshold. In a practical application, the door-opening request may further carry device addressing information of the automatic door, such as a device IP address and a device communication port number, and may further carry a device management identification.

Fig. 12 is a schematic diagram of an extended flow of the automatic door control method shown in Fig. 11. Referring to Fig. 12, the automatic door control method shown in Fig. 11 may be further extended to include the following steps.

S1210: planing a traveling route passing through an automatic door for an AGV.

S 1220: monitoring a moving position of the AGV along the traveling route.

S1230: generating and reporting to a device control apparatus a door-opening request for the automatic door, when it is monitored that the moving position of the AGV reaches a traffic upstream section of the automatic door, wherein the door-opening request is used to trigger the device control apparatus to control opening of the automatic door.

In a practical application, the door-opening request may further carry device addressing information of the automatic door, such as a device IP address and a device communication port number, and may further carry a device management identification.

S1240: acquiring the opened-in-position message sent by the device control apparatus in response to the opened-in-position state of the automatic door.

The door-opening request may further carry a device management identification, and the opened-in-position message acquired in this step may also carry the device management identification added by the device control apparatus.

S1250: detecting a traffic state of the AGV traveling through the automatic door in response to the opened-in-position message acquired.

S1260: generating and reporting to the device control apparatus a door-closing request for the automatic door in response to a passing-through completed state of the AGV, wherein the door-closing request is used to trigger the device control apparatus to control closing of the automatic door.

In a practical application, the door-closing request may further carry device addressing information of the automatic door, such as a device IP address and a device communication port number.

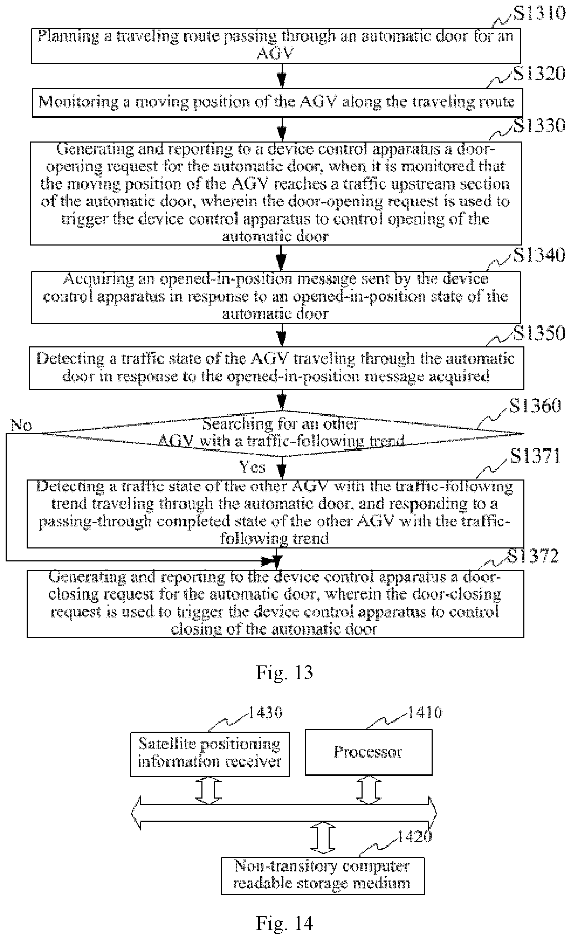

Fig. 13 is a schematic diagram of another extended flow of the automatic door control method shown in Fig. 11. Referring to Fig. 13, the automatic door control method shown in Fig. 11 may be further extended to include the following steps.

S1310: planing a traveling route passing through an automatic door for an AGV.

S1320: monitoring a moving position of the AGV along the traveling route.

S1330: generating a door-opening request for the automatic door when it is monitored that the moving position of the AGV reaches a traffic upstream section of the automatic door, wherein the door-opening request is used to trigger the device control apparatus to control opening of the automatic door.

In a practical application, the door-opening request may further carry device addressing information of the automatic door, such as a device IP address and a device communication port number, and may further carry a device management identification.

S1340: acquiring an opened-in-position message sent by the device control apparatus in response to an opened-in-position state of the automatic door.

The door-opening request may further carry a device management identification, and the opened-in-position message acquired in this step may also carry the device management identification added by the device control apparatus.

S1350: detecting a traffic state of the AGV traveling through the automatic door in response to the opened-in-position message acquired.

S1360: searching for an other AGV with a traffic-following trend.

In this step, searching for an other AGV with a traffic-following trend may adopt a determination way based on the remaining trip, which may specifically include: detecting a position relationship of a designated AGV relative to the automatic door, wherein the designated AGV being detected is an AGV other than the AGV that reaches the traffic upstream section of the automatic door and a traveling route of which passes through the automatic door; determining the designated AGV located upstream the automatic door based on the position relationship; detecting a remaining trip from the designated AGV located upstream the automatic door to the automatic door; and determining, from the designated AGV located upstream the automatic door, the designated AGV whose remaining trip to the automatic door is less than a predetermined threshold as the other AGV with the traffic-following trend.

Alternatively, searching for an other AGV with a traffic-following trend may also adopt a determination way based on a formation, which may specifically include: acquiring formation information of the AGV; determining, from a plurality of AGVs other than the AGV from the formation information, the AGV whose traveling route passes through this automatic door as the designated AGV; detecting a position relationship of the designated AGV relative to the automatic door; determining the designated AGV located upstream the automatic door based on the position relationship; detecting a remaining trip from the designated AGV located upstream the automatic door to the automatic door; and determining, from the designated AGV located upstream the automatic door, the designated AGV whose remaining trip to the automatic door is less than a predetermined threshold as the other AGV with the traffic-following trend.

No matter which kind of determination method is used, it may be applied to the equivalent substitution principle of a single automatic door shown in Fig. 5.

In a case where no other AGV with the traffic-following trend is found, switching to S1372 in response to the passing-through completed state of this AGV.

In a case where the other AGV with the traffic-following trend is found, switching to S1371.

S1371: detecting a traffic state of the other AGV with the traffic-following trend traveling through the automatic door, and switching to S1372 in response to a passing-through completed state of the other AGV with the traffic-following trend.

S1372: generating and reporting to the device control apparatus a door-closing request for the automatic door, wherein the door-closing request is used to trigger the device control apparatus to control closing of the automatic door.

In a practical application, the door-closing request may further carry device addressing information of the automatic door, such as a device IP address and a device communication port number.

As can be understood, in another implementation, in a case where the other AGV with the traffic-following trend is found, it waits for the passing-through of the other AGV with the traffic-following trend, instead of performing an action of generating the door-closing request. Since a control process of the other AGV with the traffic-following trend by the robot control apparatus is the same as the control process of the AGV that reaches the traffic upstream section of the automatic door, the robot control apparatus may search and determine whether the other AGV with the traffic-following trend is followed by another AGV, during the passing-through of the other AGV with the traffic-following trend, and if not, generate and report to the device control apparatus the door-closing request, and so on, thereby avoiding frequent closing of the automatic door.

Fig. 14 is a schematic structural diagram of a route planning apparatus in another embodiment. Referring to Fig. 14, the route planning apparatus may include a processor 1410, and the processor 1410 is configured to perform steps of the automatic door control method as shown in any of Figs. 11 to 13.

Moreover, the route planning apparatus may also include a non-transitory computer readable storage medium 1420 that stores instructions thereon, when the instructions are executed by the processor 1410, cause the processor 1410 to perform steps of the automatic door control method as shown in any of Figs. 11 to 13. In addition, the route planning apparatus may also include a satellite positioning information receiver 1430, such as a GPS (Global Positioning System) information receiver, for acquiring a moving position of the AGV.

The above descriptions are only preferred embodiments of the present disclosure and are not intended to limit the present disclosure.

## Claims

1. A robot control apparatus (30), comprising:
a route planning module configured to plan a traveling route passing through an automatic door (20) for an intelligent mobile robot, monitor a moving position of the intelligent mobile robot along the traveling route, and generate a door-opening request for the automatic door (20) when it is monitored that the moving position of the intelligent mobile robot reaches a traffic upstream section of the automatic door (20); and
a control platform module configured to send the door-opening request to a device control apparatus (40), so that the device control apparatus (40) controls opening of the automatic door (20) in response to the door-opening request;
**characterized in that**, the control platform module is further configured to create a map template comprising device nodes by means of a human-machine interaction, wherein the device nodes comprise the automatic door (20); and the route planning module is further configured to call the map template, and plan the traveling route passing through the automatic door (20) for the intelligent mobile robot by using the map template,
wherein, the control platform module is further configured to receive an opened-in-position message sent by the device control apparatus (40) in response to an opened-in-position state of the automatic door (20), and send the opened-in-position message received to the route planning module;
the route planning module is further configured to acquire the opened-in-position message received by the control platform module, detect a traffic state of the intelligent mobile robot traveling through the automatic door (20) in response to the opened-in-position message acquired, search for other intelligent mobile robot with a traffic-following trend, and generate a door-closing request for the automatic door (20) in response to a passing-through completed state of the intelligent mobile robot, in a case where no other intelligent mobile robot with the traffic-following trend is found; or the route planning module is further configured to detect a traffic state of the other intelligent mobile robot with the traffic-following trend traveling through the automatic door, in a case where the other intelligent mobile robots with the traffic-following trend is found, and generate the door-closing request for the automatic door in response to a passing-through completed state of the other intelligent mobile robot with the traffic-following trend; and
the control platform module is further configured to send the door-closing request generated by the route planning module to the device control apparatus (40), so that the device control apparatus (40) controls closing of the automatic door (20) in response to the door-closing request.

2. The robot control apparatus (30) according to claim 1, wherein
the control platform module is further configured to carry a device management identification of the automatic door (20) in the door-opening request generated by the route planning module, perform a message verification on the opened-in-position message received by using the device management identification carried in the door-opening request, and send the opened-in-position message received to the route planning module when the verification is passed.

3. A logistics control system, comprising:
a robot control apparatus (30) according to claim 1 or 2; and
a device control apparatus (40) configured to control opening of the automatic door (20) in response to the door-opening request,
wherein the device control apparatus (40) is further configured to send an opened-in-position message to the robot control apparatus (30) in response to an opened-in-position state of the automatic door (20);
the robot control apparatus is further configured to detect a traffic state of the intelligent mobile robot traveling through the automatic door in response to receipt of the opened-in-position message, search for an other intelligent mobile robot with a traffic-following trend, and generate a door-closing request for the automatic door in response to a passing-through completed state of the intelligent mobile robot, in a case where no other intelligent mobile robot with the traffic-following trend is found; or the robot control apparatus is further configured to detect a traffic state of the other intelligent mobile robot with the traffic-following trend traveling through the automatic door, in a case where an other intelligent mobile robot with the traffic-following trend is found, and generate the door-closing request for the automatic door in response to a passing-through completed state of the other intelligent mobile robot with the traffic-following trend; and
the device control apparatus (40) is further configured to control closing of the automatic door (20) in response to the door-closing request generated by the robot control apparatus (30).

4. The logistics control system according to claim 3, wherein
the robot control apparatus (30) is further configured to carry a device management identification (61) of the automatic door in the door-opening request generated, perform a message verification on the opened-in-position message received by using the device management identification carried in the door-opening request, and perform an operation of detecting a traffic state of the intelligent mobile robot traveling through the automatic door in response to receipt of the opened-in-position message, when the verification is passed; and
the device control apparatus (40) is further configured to have the device management identification in the door-opening request be carried in the opened-in-position message sent to the robot control apparatus (30) after responding to the opened-in-position state of the automatic door (20).

5. An automatic door control method, comprising:
planning a traveling route passing through an automatic door (20) for an intelligent mobile robot;
monitoring a moving position of the intelligent mobile robot along the traveling route; and
generating and reporting to a device control apparatus (40) a door-opening request for the automatic door (20), when it is monitored that the moving position of the intelligent mobile robot reaches a traffic upstream section of the automatic door (20), wherein the door-opening request is used to trigger the device control apparatus (40) to control opening of the automatic door (20);
the automatic door control method being **characterized in that** planning a traveling route passing through an automatic door (20) for an intelligent mobile robot comprises:
creating a map template comprising device nodes by means of a human-machine interaction, wherein the device nodes comprise the automatic door (20), calling the map template, and planning the traveling route passing through the automatic door (20) for the intelligent mobile robot by using the map template,
wherein after generating and reporting to a device control apparatus (40) a door-opening request for the automatic door (20), the method further comprises:
acquiring an opened-in-position message sent by the device control apparatus (40) in response to an opened-in-position state of the automatic door (20);
detecting a traffic state of the intelligent mobile robot traveling through the automatic door (20) in response to the opened-in-position message acquired, and searching for an other intelligent mobile robot with a traffic-following trend; and
generating and reporting to the device control apparatus (40) a door-closing request for the automatic door (20) in response to a passing-through completed state of the intelligent mobile robot, in a case where no other intelligent mobile robot with the traffic-following trend is found, wherein the door-closing request is used to trigger the device control apparatus (40) to control closing of the automatic door (20); or
detecting a traffic state of the other intelligent mobile robot with the traffic-following trend traveling through the automatic door (20), in a case where an other intelligent mobile robot with the traffic-following trend is found, and generating and reporting to the device control apparatus (40) the door-closing request for the automatic door (20) in response to a passing-through completed state of the other intelligent mobile robot with the traffic-following trend.

6. The automatic door control method according to claim 5, wherein a way of determining that the moving position of the intelligent mobile robot reaches a traffic upstream section of the automatic door (20) comprises:
monitoring a remaining trip from the moving position of the intelligent mobile robot to the automatic door (20); and
determining that the moving position of the intelligent mobile robot reaches the traffic upstream section of the automatic door (20) when the remaining trip from the moving position of the intelligent mobile robot to the automatic door (20) is less than a predetermined threshold.

7. The automatic door control method according to claim 5, wherein a step of searching for other intelligent mobile robot with a traffic-following trend comprises:
detecting a position relationship of a designated intelligent mobile robot relative to the automatic door (20), wherein the designated intelligent mobile robot being detected is a robot other than the intelligent mobile robot, and a traveling route of which passes through the automatic door (20);
determining the designated intelligent mobile robot located upstream the automatic door (20) based on the position relationship, and detecting a remaining trip from the designated intelligent mobile robot located upstream the automatic door (20) to the automatic door (20); and
determining, from the designated intelligent mobile robot located upstream the automatic door (20), the designated intelligent mobile robot whose remaining trip to the automatic door (20) is less than a predetermined threshold as the other intelligent mobile robot with the traffic-following trend;
preferably, before detecting a position relationship of a designated intelligent mobile robot relative to the automatic door (20), the method further comprises:
acquiring formation information of the intelligent mobile robot; and
determining, from a plurality of intelligent mobile robots other than the intelligent mobile robot from the formation information, an intelligent mobile robot whose traveling route passes through the automatic door (20) as the designated intelligent mobile robot.

8. A non-transitory computer readable storage medium having instructions storied thereon, which when executed by a processor, cause the processor to perform steps of the automatic door control method according to any of claims 5 to 7.

## Patentansprüche

1. Robotersteuerungseinrichtung (30), umfassend:
ein Routenplanungsmodul, das so konfiguriert ist, dass es eine durch eine automatische Tür (20) führende Fahrtroute für einen intelligenten mobilen Roboter plant, eine Bewegungsposition des intelligenten mobilen Roboters entlang der Fahrtroute überwacht und eine Türöffnungsanforderung für die automatische Tür (20) erzeugt, wenn überwacht wird, dass die Bewegungsposition des intelligenten mobilen Roboters einen vorgelagerten Verkehrsabschnitt der automatischen Tür (20) erreicht; und
ein Steuerplattformmodul, das so konfiguriert ist, dass es die Türöffnungsanforderung an eine Vorrichtungssteuerungseinrichtung (40) sendet, so dass die Vorrichtungssteuerungseinrichtung (40) Öffnen der automatischen Tür (20) als Reaktion auf die Türöffnungsanforderung steuert;
**dadurch gekennzeichnet, dass** das Steuerplattformmodul weiter so konfiguriert ist, dass es mittels einer Mensch-Maschine-Interaktion eine Kartenvorlage erzeugt, die Vorrichtungsknoten umfasst, wobei die Vorrichtungsknoten die automatische Tür (20) umfassen; und das Routenplanungsmodul weiter so konfiguriert ist, dass es die Kartenvorlage aufruft und die durch die automatische Tür (20) führenden Fahrtroute für den intelligenten mobilen Roboter unter Verwendung der Kartenvorlage plant,
wobei das Steuerplattformmodul weiter so konfiguriert ist, dass es eine von der Vorrichtungssteuerungseinrichtung (40) als Reaktion auf einen Offenstellungszustand der automatischen Tür (20) gesendete Offenstellungsmeldung empfängt und die empfangene Offenstellungsmeldung an das Routenplanungsmodul sendet;
wobei das Routenplanungsmodul weiter so konfiguriert ist, dass es die von dem Steuerungsplattformmodul empfangene Offenstellungsmeldung abruft, einen Verkehrszustand des intelligenten mobilen Roboters, der durch die automatische Tür (20) fährt, als Reaktion auf die abgerufene Offenstellungsmeldung erfasst, nach anderen intelligenten mobilen Robotern mit einer dem Verkehr folgenden Tendenz sucht und eine Türschließanforderung für die automatische Tür (20) als Reaktion auf einen abgeschlossenen Durchfahrtszustand des intelligenten mobilen Roboters in einem Fall erzeugt, in dem kein anderer intelligenter mobiler Roboter mit der dem Verkehr folgenden Tendenz gefunden wird; oder das Routenplanungsmodul weiter so konfiguriert ist, dass es einen Verkehrszustand des anderen intelligenten mobilen Roboters mit der dem Verkehr folgenden Tendenz, der durch die automatische Tür fährt, in einem Fall erfasst, in dem der andere intelligente mobile Roboter mit der dem Verkehr folgenden Tendenz gefunden wird, und die Türschließanforderung für die automatische Tür als Reaktion auf einen abgeschlossenen Durchfahrtszustand des anderen intelligenten mobilen Roboters mit der dem Verkehr folgenden Tendenz erzeugt; und
wobei das Steuerplattformmodul weiter so konfiguriert ist, dass es die von dem Routenplanungsmodul erzeugte Türschließanforderung an die Vorrichtungssteuerungseinrichtung (40) sendet, so dass die Vorrichtungssteuerungseinrichtung (40) Schließen der automatischen Tür (20) als Reaktion auf die Türschließanforderung steuert.

2. Robotersteuerungseinrichtung (30) nach Anspruch 1, wobei
das Steuerplattformmodul weiter so konfiguriert ist, dass es eine Vorrichtungsverwaltungsidentifikation der automatischen Tür (20) in der vom Routenplanungsmodul erzeugten Türöffnungsanforderung überträgt, eine Meldungsverifizierung der Offenstellungsmeldung, die unter Verwendung der in der Türöffnungsanforderung übertragenen Vorrichtungsverwaltungsidentifikation empfangen wurde, durchführt und die empfangene Offenstellungsmeldung an das Routenplanungsmodul sendet, wenn die Verifizierung bestanden wurde.

3. Logistiksteuerungssystem, umfassend:
eine Robotersteuerungseinrichtung (30) nach Anspruch 1 oder 2; und
eine Vorrichtungssteuerungseinrichtung (40), die so konfiguriert ist, dass sie Öffnen der automatischen Tür (20) als Reaktion auf die Türöffnungsanforderung steuert,
wobei die Vorrichtungssteuerungseinrichtung (40) weiter so konfiguriert ist, dass sie als Reaktion auf einen Offenstellungszustand der automatischen Tür (20) eine Offenstellungsmeldung an die Robotersteuerungseinrichtung (30) sendet;
wobei die Robotersteuerungseinrichtung weiter so konfiguriert ist, dass sie einen Verkehrszustand des intelligenten mobilen Roboters, der durch die automatische Tür fährt, als Reaktion auf Empfang der Offenstellungsmeldung erfasst, nach einem anderen intelligenten mobilen Roboter mit einer dem Verkehr folgenden Tendenz sucht und eine Türschließanforderung für die automatische Tür als Reaktion auf einen abgeschlossenen Durchfahrtszustand des intelligenten mobilen Roboters in einem Fall erzeugt, in dem kein anderer intelligenter mobiler Roboter mit der dem Verkehr folgenden Tendenz gefunden wird; oder die Robotersteuerungseinrichtung weiter so konfiguriert ist, dass sie einen Verkehrszustand des anderen intelligenten mobilen Roboters mit der dem Verkehr folgenden Tendenz, der durch die automatische Tür fährt, in einem Fall erfasst, in dem ein anderer intelligenter mobiler Roboter mit der dem Verkehr folgenden Tendenz gefunden wird, und die Türschließanforderung für die automatische Tür als Reaktion auf einen abgeschlossenen Durchfahrtszustand des anderen intelligenten mobilen Roboters mit der dem Verkehr folgenden Tendenz erzeugt; und
die Vorrichtungssteuerungseinrichtung (40) weiter so konfiguriert ist, dass sie Schließen der automatischen Tür (20) als Reaktion auf die von der Robotersteuerungseinrichtung (30) erzeugte Türschließanforderung steuert.

4. Logistiksteuerungssystem nach Anspruch 3, wobei
die Robotersteuerungseinrichtung (30) weiter so konfiguriert ist, dass sie eine Vorrichtungsverwaltungsidentifikation (61) der automatischen Tür in der erzeugten Türöffnungsanforderung überträgt, eine Meldungsverifizierung der Offenstellungsmeldung, die unter Verwendung der in der Türöffnungsanforderung übertragenen Vorrichtungsverwaltungsidentifikation empfangen wurde, durchführt und einen Vorgang vom Erfassen eines Verkehrszustands des intelligenten mobilen Roboters, der durch die automatische Tür fährt, als Reaktion auf Empfang der Offenstellungsmeldung durchführt, wenn die Verifizierung bestanden wurde; und
die Vorrichtungssteuerungseinrichtung (40) weiter so konfiguriert ist, dass sie die Vorrichtungsverwaltungsidentifikation in der Türöffnungsanforderung in die Offenstellungsmeldung überträgt, die an die Robotersteuerungseinrichtung (30) gesendet wird, nachdem sie auf den Offenstellungszustand der automatischen Tür (20) reagiert hat.

5. Verfahren zur automatischen Türsteuerung, umfassend:
Planen einer durch eine automatische Tür (20) führenden Fahrtroute für einen intelligenten mobilen Roboter;
Überwachung einer Bewegungsposition des intelligenten mobilen Roboters entlang der Fahrtroute; und
Erzeugen und Melden einer Türöffnungsanforderung für die automatische Tür (20) an eine Vorrichtungssteuerungseinrichtung (40), wenn überwacht wird, dass die Bewegungsposition des intelligenten mobilen Roboters einen vorgelagerten Verkehrsabschnitt der automatischen Tür (20) erreicht, wobei die Türöffnungsanforderung verwendet wird, um die Vorrichtungssteuerungseinrichtung (40) auszulösen, Öffnen der automatischen Tür (20) zu steuern;
wobei das Verfahren zur automatischen Türsteuerung **dadurch gekennzeichnet ist, dass** Planung einer Fahrtroute durch eine automatische Tür (20) für einen intelligenten mobilen Roboter Folgendes umfasst:
Erzeugen einer Kartenvorlage, die Vorrichtungsknoten umfasst, mittels einer Mensch-Maschine-Interaktion, wobei die Vorrichtungsknoten die automatische Tür (20) umfassen, Aufrufen der Kartenvorlage und Planen der durch die automatische Tür (20) führenden Fahrtroute für den intelligenten mobilen Roboter unter Verwendung der Kartenvorlage,
wobei das Verfahren nach dem Erzeugen und Melden einer Türöffnungsanforderung für die automatische Tür (20) an eine Vorrichtungssteuerungseinrichtung (40) weiter Folgendes umfasst:
Abrufen einer Offenstellungsmeldung, die von der Vorrichtungssteuerungseinrichtung (40) als Reaktion auf einen Offenstellungszustand der automatischen Tür (20) gesendet wird;
Erfassen eines Verkehrszustandes des intelligenten mobilen Roboters, der durch die automatische Tür (20) fährt, als Reaktion auf die abgerufene Offenstellungsmeldung, und Suchen eines anderen intelligenten mobilen Roboters mit einer dem Verkehr folgenden Tendenz; und
Erzeugen und Melden einer Türschließanforderung für die automatische Tür (20) an die Vorrichtungssteuerungseinrichtung (40) als Reaktion auf einen abgeschlossenen Durchfahrtszustand des intelligenten mobilen Roboters in einem Fall, in dem kein anderer intelligenter mobiler Roboter mit der dem Verkehr folgenden Tendenz gefunden wird, wobei die Türschließanforderung verwendet wird, um die Vorrichtungssteuerungseinrichtung (40) auszulösen, Schließen der automatischen Tür (20) zu steuern; oder
Erfassen eines Verkehrszustandes des anderen intelligenten mobilen Roboters mit der dem Verkehr folgenden Tendenz, der durch die automatische Tür (20) fährt, in einem Fall, in dem ein anderer intelligenter mobiler Roboter mit der dem Verkehr folgenden Tendenz gefunden wird, und Erzeugen und Melden der Türschließanforderung für die automatische Tür (20) an die Vorrichtungssteuerungseinrichtung (40) als Reaktion auf einen abgeschlossenen Durchfahrtszustand des anderen intelligenten mobilen Roboters mit der dem Verkehr folgenden Tendenz.

6. Verfahren zur automatischen Türsteuerung nach Anspruch 5, wobei eine Art der Bestimmung, dass die Bewegungsposition des intelligenten mobilen Roboters einen vorgelagerten Verkehrsabschnitt der automatischen Tür (20) erreicht, Folgendes umfasst:
Überwachen einer verbleibenden Strecke von der Bewegungsposition des intelligenten mobilen Roboters bis zur automatischen Tür (20); und
Bestimmen, dass die Bewegungsposition des intelligenten mobilen Roboters den vorgelagerten Verkehrsabschnitt der automatischen Tür (20) erreicht, wenn die verbleibende Strecke von der Bewegungsposition des intelligenten mobilen Roboters bis zur automatischen Tür (20) kleiner als ein vorbestimmter Schwellenwert ist.

7. Verfahren zur automatischen Türsteuerung nach Anspruch 5, wobei ein Schritt zum Suchen nach anderen intelligenten mobilen Robotern mit einer dem Verkehr folgenden Tendenz Folgendes umfasst:
Erfassen einer Positionsbeziehung eines vorgesehenen intelligenten mobilen Roboters relativ zu der automatischen Tür (20), wobei der erfasste vorgesehene intelligente mobile Roboter ein anderer Roboter als der intelligente mobile Roboter ist und eine Fahrtroute desselben durch die automatische Tür (20) führt;
Bestimmen des vorgesehenen intelligenten mobilen Roboters, der sich vorgelagert zur automatischen Tür (20) befindet, auf der Grundlage der Positionsbeziehung, und Erfassen einer verbleibenden Strecke des vorgesehenen intelligenten mobilen Roboters, der sich vorgelagert zur automatischen Tür (20) befindet, zu der automatischen Tür (20); und
Bestimmen, von dem vorgesehenen intelligenten mobilen Roboter, der sich vorgelagert zur automatischen Tür (20) befindet, des vorgesehenen intelligenten mobilen Roboters, dessen verbleibende Strecke zur automatischen Tür (20) kleiner als ein vorbestimmter Schwellenwert ist, als den anderen intelligenten mobilen Roboter mit der dem Verkehr folgenden Tendenz;
vorzugsweise umfasst das Verfahren vor Erfassen einer Positionsbeziehung eines vorgesehenen intelligenten mobilen Roboters relativ zu der automatischen Tür (20) weiter Folgendes:
Abrufen von Formationsinformationen des intelligenten mobilen Roboters; und
Bestimmen eines intelligenten mobilen Roboters, aus einer Vielzahl von intelligenten mobilen Robotern, die sich von dem intelligenten mobilen Roboter unterscheiden, aus den Formationsinformationen, dessen Fahrtroute durch die automatische Tür (20) führt, als den vorgesehenen intelligenten mobilen Roboter.

8. Nichtflüchtiges computerlesbares Speichermedium, das Anweisungen darauf gespeichert aufweist, die, wenn sie von einem Prozessor ausgeführt werden, den Prozessor veranlassen, Schritte des Verfahrens zur automatischen Türsteuerung nach einem der Ansprüche 5 bis 7 durchzuführen.

## Revendications

1. Appareil de commande de robot (30), comprenant :
un module de planification d'itinéraire configuré pour planifier un itinéraire de déplacement passant par une porte automatique (20) pour un robot mobile intelligent, surveiller une position de déplacement du robot mobile intelligent le long de l'itinéraire de déplacement et générer une demande d'ouverture de porte pour la porte automatique (20) lorsqu'il est constaté que la position de déplacement du robot mobile intelligent atteint une section de circulation en amont de la porte automatique (20) ; et
un module de plate-forme de commande configuré pour envoyer la demande d'ouverture de porte à un appareil de commande de dispositif (40) de telle sorte que l'appareil de commande de dispositif (40) commande l'ouverture de la porte automatique (20) en réponse à la demande d'ouverture de porte ;
**caractérisé en ce que** le module de plate-forme de commande est en outre configuré pour créer un modèle de carte comprenant des noeuds de dispositif au moyen d'une interaction homme-machine, dans lequel les noeuds de dispositif comprennent la porte automatique (20) ; et le module de planification d'itinéraire est en outre configuré pour appeler le modèle de carte et planifier l'itinéraire de déplacement passant par la porte automatique (20) pour le robot mobile intelligent en utilisant le modèle de carte,
dans lequel le module de plate-forme de commande est en outre configuré pour recevoir un message d'ouverture en position envoyé par l'appareil de commande de dispositif (40) en réponse à un état d'ouverture en position de la porte automatique (20) et envoyer le message d'ouverture en position reçu au module de planification d'itinéraire ;
le module de planification d'itinéraire est en outre configuré pour acquérir le message d'ouverture en position reçu par le module de plate-forme de commande, détecter un état de circulation du robot mobile intelligent franchissant la porte automatique (20) en réponse au message d'ouverture en position acquis, rechercher un autre robot mobile intelligent ayant une tendance de suivi de circulation, et générer une demande de fermeture de porte pour la porte automatique (20) en réponse à un état de franchissement terminé du robot mobile intelligent, dans un cas où aucun autre robot mobile intelligent ayant la tendance de suivi de circulation n'est trouvé ; ou le module de planification d'itinéraire est en outre configuré pour détecter un état de circulation de l'autre robot mobile intelligent ayant la tendance de suivi de circulation franchissant la porte automatique, dans un cas où l'autre robot mobile intelligent ayant la tendance de suivi de circulation est trouvé, et générer la demande de fermeture de porte pour la porte automatique en réponse à un état de franchissement terminé de l'autre robot mobile intelligent ayant la tendance de suivi de circulation ; et
le module de plate-forme de commande est en outre configuré pour envoyer la demande de fermeture de porte générée par le module de planification d'itinéraire à l'appareil de commande de dispositif (40) de telle sorte que l'appareil de commande de dispositif (40) commande la fermeture de la porte automatique (20) en réponse à la demande de fermeture de porte.

2. Appareil de commande de robot (30) selon la revendication 1, dans lequel
le module de plate-forme de commande est en outre configuré pour transporter une identification de gestion de dispositif de la porte automatique (20) dans la demande d'ouverture de porte générée par le module de planification d'itinéraire, effectuer une vérification de message sur le message d'ouverture en position reçu en utilisant l'identification de gestion de dispositif transportée dans la demande d'ouverture de porte, et envoyer le message d'ouverture en position reçu au module de planification d'itinéraire lorsque la vérification est réussie.

3. Système de commande logistique, comprenant :
un appareil de commande de robot (30) selon la revendication 1 ou 2 ; et
un appareil de commande de dispositif (40) configuré pour commander l'ouverture de la porte automatique (20) en réponse à la demande d'ouverture de porte,
dans lequel l'appareil de commande de dispositif (40) est en outre configuré pour envoyer un message d'ouverture en position à l'appareil de commande de robot (30) en réponse à un état d'ouverture en position de la porte automatique (20) ;
l'appareil de commande de robot est en outre configuré pour détecter un état de circulation du robot mobile intelligent franchissant la porte automatique en réponse à la réception du message d'ouverture en position, rechercher un autre robot mobile intelligent ayant une tendance de suivi de circulation, et générer une demande de fermeture de porte pour la porte automatique en réponse à un état de franchissement terminé du robot mobile intelligent, dans un cas où aucun autre robot mobile intelligent ayant la tendance de suivi de circulation n'est trouvé ; ou l'appareil de commande de robot est en outre configuré pour détecter un état de circulation de l'autre robot mobile intelligent ayant la tendance de suivi de circulation franchissant la porte automatique, dans un cas où un autre robot mobile intelligent ayant la tendance de suivi de circulation est trouvé, et générer la demande de fermeture de porte pour la porte automatique en réponse à un état de franchissement terminé de l'autre robot mobile intelligent ayant la tendance de suivi de circulation ; et
l'appareil de commande de dispositif (40) est en outre configuré pour commander la fermeture de la porte automatique (20) en réponse à la demande de fermeture de porte générée par l'appareil de commande de robot (30).

4. Système de commande logistique selon la revendication 3, dans lequel
l'appareil de commande de robot (30) est en outre configuré pour transporter une identification de gestion de dispositif (61) de la porte automatique dans la demande d'ouverture de porte générée, effectuer une vérification de message sur le message d'ouverture en position reçu en utilisant l'identification de gestion de dispositif transportée dans la demande d'ouverture de porte et effectuer une opération de détection d'un état de circulation du robot mobile intelligent franchissant la porte automatique en réponse à la réception du message d'ouverture en position, lorsque la vérification est réussie ; et
l'appareil de commande de dispositif (40) est en outre configuré pour faire transporter l'identification de gestion de dispositif dans la demande d'ouverture de porte dans le message d'ouverture en position envoyé à l'appareil de commande de robot (30) après avoir répondu à l'état d'ouverture en position de la porte automatique (20).

5. Procédé de commande de porte automatique, comprenant :
la planification d'un itinéraire de déplacement passant par une porte automatique (20) pour un robot mobile intelligent ;
la surveillance d'une position de déplacement du robot mobile intelligent le long de l'itinéraire de déplacement ; et
la génération et la communication à un appareil de commande de dispositif (40) d'une demande d'ouverture de porte pour la porte automatique (20), lorsqu'il est constaté que la position de déplacement du robot mobile intelligent atteint une section de circulation en amont de la porte automatique (20), dans lequel la demande d'ouverture de porte est utilisée pour amener l'appareil de commande de dispositif (40) à commander l'ouverture de la porte automatique (20) ;
le procédé de commande de porte automatique étant **caractérisé en ce que** la planification d'un itinéraire de déplacement passant par une porte automatique (20) pour un robot mobile intelligent comprend :
la création d'un modèle de carte comprenant des noeuds de dispositif au moyen d'une interaction homme-machine, dans lequel les noeuds de dispositif comprennent la porte automatique (20), l'appel du modèle de carte et la planification de l'itinéraire de déplacement passant par la porte automatique (20) pour le robot mobile intelligent en utilisant le modèle de carte,
dans lequel, après la génération et la communication à un appareil de commande de dispositif (40) d'une demande d'ouverture de porte pour la porte automatique (20), le procédé comprend en outre :
l'acquisition d'un message d'ouverture en position envoyé par l'appareil de commande de dispositif (40) en réponse à un état d'ouverture en position de la porte automatique (20) ;
la détection d'un état de circulation du robot mobile intelligent franchissant la porte automatique (20) en réponse au message d'ouverture en position acquis, et la recherche d'un autre robot mobile intelligent ayant une tendance de suivi de circulation ; et
la génération et la communication à l'appareil de commande de dispositif (40) d'une demande de fermeture de porte pour la porte automatique (20) en réponse à un état de franchissement terminé du robot mobile intelligent, dans un cas où aucun autre robot mobile intelligent ayant la tendance de suivi de circulation n'est trouvé, dans lequel la demande de fermeture de porte est utilisée pour amener l'appareil de commande de dispositif (40) à commander la fermeture de la porte automatique (20) ; ou
la détection d'un état de circulation de l'autre robot mobile intelligent ayant la tendance de suivi de circulation franchissant la porte automatique (20), dans un cas où un autre robot mobile intelligent ayant la tendance de suivi de circulation est trouvé, et la génération et la communication à l'appareil de commande de dispositif (40) de la demande de fermeture de porte pour la porte automatique (20) en réponse à un état de franchissement terminé de l'autre robot mobile intelligent ayant la tendance de suivi de circulation.

6. Procédé de commande de porte automatique selon la revendication 5, dans lequel une manière de déterminer que la position de déplacement du robot mobile intelligent atteint une section de circulation en amont de la porte automatique (20) comprend :
la surveillance d'un trajet restant depuis la position de déplacement du robot mobile intelligent jusqu'à la porte automatique (20) ; et
la détermination que la position de déplacement du robot mobile intelligent atteint la section de circulation en amont de la porte automatique (20) lorsque le trajet restant depuis la position de déplacement du robot mobile intelligent jusqu'à la porte automatique (20) est inférieur à un seuil prédéterminé.

7. Procédé de commande de porte automatique selon la revendication 5, dans lequel une étape de recherche d'un autre robot mobile intelligent ayant une tendance de suivi de circulation comprend :
la détection d'une relation de position d'un robot mobile intelligent désigné par rapport à la porte automatique (20), dans lequel le robot mobile intelligent désigné qui est détecté est un robot autre que le robot mobile intelligent, et dont un itinéraire de déplacement passe par la porte automatique (20) ;
la détermination du robot mobile intelligent désigné situé en amont de la porte automatique (20) sur la base de la relation de position, et la détection d'un trajet restant depuis le robot mobile intelligent désigné situé en amont de la porte automatique (20) jusqu'à la porte automatique (20) ; et
la détermination, à partir du robot mobile intelligent désigné situé en amont de la porte automatique (20), du robot mobile intelligent désigné dont le trajet restant jusqu'à la porte automatique (20) est inférieur à un seuil prédéterminé comme étant l'autre robot mobile intelligent ayant la tendance de suivi de circulation ;
de préférence, avant la détection d'une relation de position d'un robot mobile intelligent désigné par rapport à la porte automatique (20), le procédé comprend en outre :
l'acquisition d'informations de formation du robot mobile intelligent ; et
la détermination, parmi une pluralité de robots mobiles intelligents autres que le robot mobile intelligent à partir des informations de formation, d'un robot mobile intelligent dont l'itinéraire de déplacement passe par la porte automatique (20) comme étant le robot mobile intelligent désigné.

8. Support de stockage non transitoire lisible par ordinateur sur lequel sont stockées des instructions qui, lorsqu'elles sont exécutées par un processeur, amènent le processeur à réaliser les étapes du procédé de commande de porte automatique selon l'une quelconque des revendications 5 à 7.
